# EUROPEAN PATENT APPLICATION

(11) **EP 1 995 892 A1**
(43) Date of publication of application: **26.11.2008**
(21) Application number: 07425318.8
(22) Date of filing: 24.05.2007
(51) Int. Cl.: H04B 7/26

(54) **Method of time aligning multimedia broadcast/multicast service radio bearers**

(71) Applicant: Nokia Siemens Networks S.p.A., 20126 Milano (IT)
(72) Inventor: De Benedittis, Rossella, 20137 Milano (IT); Durastante, Gianluca, 67040 Poggio Di Rolo (IT); Malafronte, Gennaro Ciro, 80050 Casola di Napoli (IT)
(74) Representative: Giustini, Delio

(57) **Abstract**

A method is disclosed for guaranteeing the time alignment between the common physical channels (7a, 7b) conveying the same MBMS data to a same user (5) from multiple cells (2a, 2b) controlled by different Node Bs. The method includes periodically monitoring (21) the timing difference between said common channels and, upon detection of the attainment of a critical value of said difference (23), sending (24) to one of the Node Bs a reconfiguration message for correcting the frame and/or chip offsets on the channels (7a, 7b) which is in advance, without tearing down the channel itself.

## Description

### Field of the invention

The present invention refers to information services offered to users of cellular communication systems, such as the Multimedia Broadcast/MultiCast Service (MBMS) developed within the 3rd Generation Partnership Project (3GPP), and more particularly it concerns a method of guaranteeing the time alignment between transmissions of the same MBMS data from multiple cells to the same User Equipment (UE).

### Background of the Invention

MBMS is a service providing subscribers with information data, typically in a format of Internet Protocol (IP) data packets. The features of the MBMS are disclosed in a number of 3GPP Technical Specifications (TS). Reference can be made for instance to 3GPP TS 23.246, which describes architectural and functional solutions, and 3GPP TS 25.346, which describes the introduction of the service in the Radio Access Network.

Two transmission modes are foreseen for delivering MBMS services:
- Point-to-Point (p-t-p) transmission mode: services are exchanged on logical dedicated connection between the Radio Access Network (RNA) and the specific UE;
- Point-to-Multipoint (p-t-m) transmission mode: services are provided to the users on logical and transport common channels without the need to establish logical dedicated connections. In this mode, the transport channel is the Forward Access Channel (FACH) and the bearing physical channel is the Secondary Common Control Physical Channel (S-CCPCH).

Two types of logical channels are provided for MBMS: the MBMS Control Channel (MCCH) and the MBMS Traffic Channel (MTCH). The MCCH is used to transfer MBMS control information to the MBMS UEs; the MTCH is used to transmit data of a specific MBMS service to the MBMS UEs.

The p-t-m transmission mode only is of interest for the invention.

In p-t-m transmission mode, power is the limiting factor: since there is no closed loop power control as there is no dedicated connection, the transmission power required to the single cell for MBMS should be sufficiently high to reach all camped users, i.e. also the ones which are at the cell border. The consequence is that no more power budget in the cell might be left for the other services.

Limiting the transmit power could be a solution but it entails giving up to serve the far users. Another possibility could be using a macro-diversity scheme, according to which multiple cells coordinate each other in order to broadcast the same service almost at the same time towards the served users. The users will then soft combine the signals from the multiple cells before decoding. This allows reducing the single cell transmit power without reducing the cell coverage. Yet, for the support of MBMS soft combining at the UE, the timing difference between the MBMS transmissions from the different cells has to be limited. According to the standard, the maximum timing difference allowed is 1 Time Slot plus the service specific Transmission Time Interval (TTl).

For cells belonging to the same Node B, this is not an issue as the cells are synchronised to the same reference signal; i.e. to the Node B clock, and their respective transmission timing is controlled via the chip and frame offsets of the respective S-CCPCH.

For cells belonging to different Node Bs, a mechanism for synchronising the cells and keeping them synchronised is required, since there is no common reference synchronisation signal, but each Node B has its own clock with a stability less than or equal to 50 parts-per-billion (ppb).

TS 25.402 suggests for that purpose to use the Node B synchronisation procedure. Via this procedure, the RNC can estimate the respective Node B timing and therefore setup the physical channel for carrying MBMS, i.e. S-CCPCH, with the appropriate timing offsets. After the establishment of the S-CCPCHs, the Node B timing difference may increase due to drifting Node B clock. Such drift can be detected by the RNC periodically performing Node B synchronisation procedure and, in case time differences are growing too large, the RNC can decide either to reschedule the transmission of the MBMS PDUs (Packet Data Units) towards some cells or to delete and then re-establish the corresponding S-CCPCHs with the correct timing.

Rescheduling is hard to achieve due to inaccuracy of the clock timing measurements: indeed, the phase difference between RFN (RNC Frame Number) and BFN (Node B Frame Number) should be measured with an accuracy of at least 1 time slot, which is indeed difficult to achieve. Therefore the only possibility left by the current 3GPP standard is the deletion and re-establishment of an S-CCPCH for one of the cells, with the consequence that the service needs to be interrupted for a given time in that cell so that the diversity gain can no longer be exploited.

The procedure of releasing and re-establishing a common channel however gives rise to a number of problems, including:
- the procedure can create instability problems in the resource allocation, in that the resources used for the MBMS before the release can become used by other services within the same cell or in other cells and be no longer available at the moment the channel is set up again;
- the MBMS may be multiplexed on the channel with other services, which also are to be temporarily suspended;
- releasing a high-power channel is in any case a cause of troubles, especially in CDMA systems like 3rd generation cellular systems. Actually, cells of a CDMA system share all radio resources in a mutually controlled interference environment; the release or the usage of a radio resource by one cell of the system changes the interference level perceived by the other cells of the system.

Note that, even if the situation disclosed substantially corresponds to a soft handover, the problem of the lack of synchronisation between different Nodes B does not exist either in case of dedicated conventional voice and data communications, which have limited durations so that no sensible clock drift is experienced, or in case of non-MBMS common channels, as no macrodiversity is applied.

WO 2006/074355 A discloses a communication system in which users receiving MBMS data in p-t-m transmission mode via multiple Node Bs are provided with scheduling information to synchronise soft combining of the data received from each of multiple Node Bs. The scheduling information allows compensating the phase difference between clocks of different cells introduced at the cell setup. The problem of the clock drift is not addressed.

Thus, the need still exists for a method that allows keeping and recovering synchronisation between common channels delivering the same MBMS data to a user equipment from different cells.

### Summary of the Invention

The invention provides, in a first aspect, a method of compensating a clock drift among Node Bs simultaneously providing a point-to-multipoint MBMS service to a user, in which the timing difference among said Node Bs is monitored and, upon detection of the attainment of a critical value of that timing difference, a reconfiguration message is sent to at least one of such Node Bs in order to correct timing parameters of a physical common channel carrying the MBMS service while said common channel is in operation.

In a second aspect, there is provided a radio network controller arranged to implement the above method.

In a third aspect, there is provided a wireless communication system including said radio network controller.

The invention also provides a computer program containing instructions for causing a processor or a computer in a radio network controller of a wireless communication system supporting the MBMS service to implement the above method.

### Brief description of the drawings

Further objects, characteristics and advantages of the invention will become apparent from the following description of preferred embodiments, given by way of non-limiting examples and illustrated in the accompanying drawings, in which:
- Fig. 1 is a simplified schematic block diagram of an MBMS service area in which the present invention is applied;
- Fig. 2 is a flow chart of a method of providing the MBMS service including the present invention,
- Fig. 3 is a general diagram of the message exchange during the reconfiguration procedure;
- Figs. 4 and 5 are tabular representations of two alternative reconfiguration request messages used in the method of the invention;
- Figs. 6 and 7 are tabular representations of response and failure messages used in the method of the invention; and
- Fig. 8 is a graphical representation of an example of timing reconfiguration.

### Description of the preferred embodiments

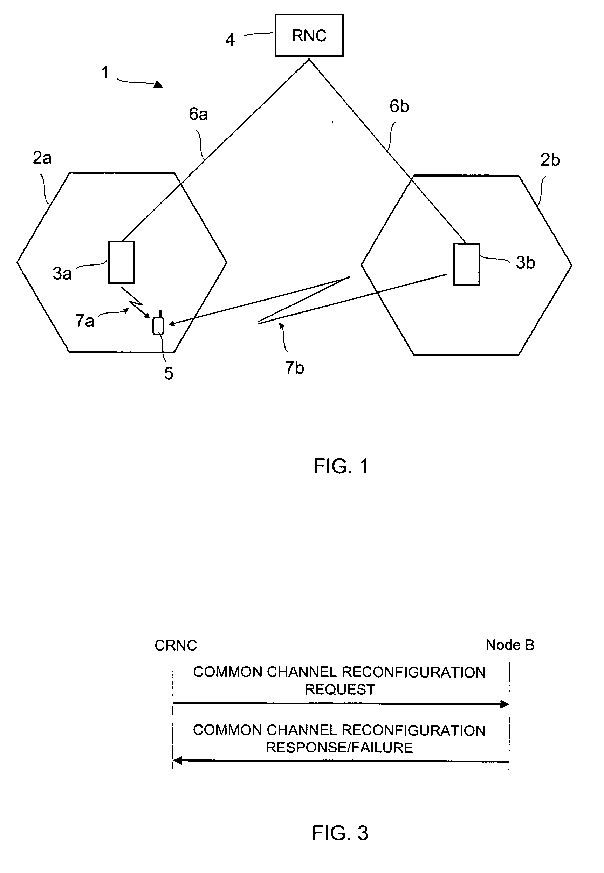

Referring to Fig. 1, there is schematically shown part of an MBMS service area, generally denoted by reference numeral 1. Only two cells 2a and 2b are shown, each controlled by an own Node B 3a and 3b, respectively. Of course, service area 1 will generally comprise a plurality of cells, some of which could be controlled by the same Node B. Reference 4 denotes a Radio Network Control (RNC) serving that area and receiving MBMS data from an MBMS content provider through e.g. Serving GPRS Support Nodes, Gateway GPRS Support Nodes and a data network. Those components are not shown since they are not of interest for the invention. A single user 5, located e.g. in cell 2a, is shown. The invention is applicable when user 5 receives the MBMS service in point-to-multipoint (p-t-m) transmission mode, so that common channels (FACH as the transport channel and S-CCPCH as the physical channel) are employed for transmitting user plane and control plane information to user 5, and when user 5 receives MTCH PDUs from both cells 2a and 2b and soft combines corresponding MTCH PDUs coming from both cells. References 6a, 6b denote the lub interfaces between RNC 4 and Node Bs 3a, 3b, and references 7a, 7b denote the radio bearers carried by the common physical channels S-CCPCH transmitted from Node Bs 3a, 3b to user 5. As said in the introduction of the specification, in order to make soft combining at the user equipment possible, corresponding signals on channels 7a, 7b must arrive at user 5 with a time difference not exceeding 1 time transmission interval plus 1 time slot.

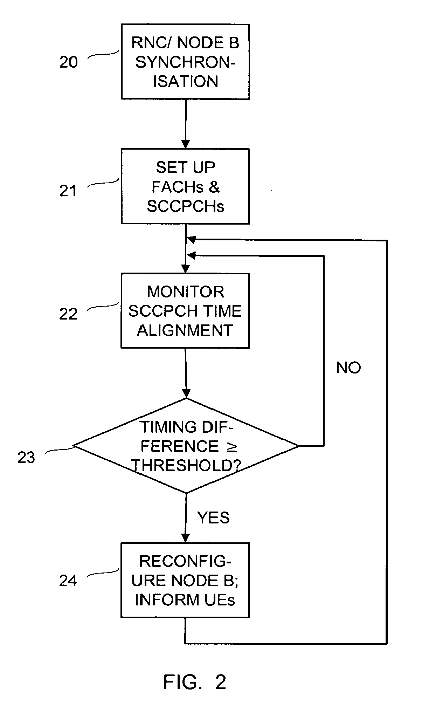

A method of providing the MBMS service to user 5 where the present invention is implemented is now described with reference to the flow chart in Fig. 2.

In a starting step 20, RNC 4 provides for a synchronisation with all Node Bs connected thereto, by measuring, e.g. through the RNC Node Synchronisation procedure, the phase difference between its RNC Frame Number Counter (RFN) and the Node B Frame Number Counters (BFNs).

Then, at step 21, RNC 4 starts setting up the transport and physical channels (FACH and S-CCPCH, respectively) necessary for transmitting the MBMS data flow over Node Bs 2a and 2b, The setup takes place through Node B Application Part (NBAP) "COMMON TRANSPORT CHANNEL SETUP/RESPONSE" messages exchanged between RNC 4 and Node Bs 2a, 2b. Such messages are defined in 3GPP TS 25.433 and they need not to be disclosed in detail, since they are not affected by the invention. By using the measures collected at step 20, RNC 4 properly configures the frame offset and chip offset parameters of the S-CCPCHs of the different Node Bs so that they are actually properly time aligned.

Channel setup can take place either in dynamic manner, upon reception of an explicit MBMS SESSION START request from the core network, or in static manner, e.g. when cells 2a, 2b are set up. In the latter case, the common transport and physical channels having been configured will remain unused until the arrival of the session start request.

Whatever the setup mode adopted, starting from the setup instant, physical channels S-CCPCHs of different Node Bs will progressively become desynchronised, due to the limited precision of the Node B clocks. Thus, a periodic monitoring of the time alignment state has to be performed (step 22), in order to detect whether the dephasing or timing difference between S-CCPCHs 7a and 7b is approaching a critical value, which will be of course sufficiently lower than the limit of 1 TTI + 1 time slot set by the standard. The exact value of critical value will depend on the particular implementation: however, as a non-limiting general indication, it may be about 50 - 60% the maximum admitted timing difference.

Monitoring can be performed through the Node B synchronisation, as suggested by 3GPP TS 25.402. However, the 3GPP procedures also envisage the possibility of getting timing difference information through measures performed by the user equipment and reported "on demand" to RNC.

As long as the dephasing is less than the critical value (output NO of step 22) the process cycles through steps 21 and 22.

As soon as the dephasing reaches the critical value (output YES of step 22), the method of alignment recovery according to the present invention is started (step 23).

The method of the invention provides for synchronisation recovery between S-CCPCHs 7a and 7b without need of either rescheduling the MTCH PDUs over the existing S-CCPCHs or deleting and re-establishing one of such channels.

For the recovery, the invention exploits a procedure similar to the procedure defined in 3GPP TS 25.433 for transport channel reconfiguration while the transport channels are still in operation. To this end, RNC sends to the concerned Node B (e.g. the neighbour Node B 3b), by using the Node B Control Part signalling, a reconfiguration request message indicating that certain S-CCPCH timing parameters are to be reconfigured. More particularly, the message shall include the following Information Elements (lEs):
- S-CCPCH identity;
- Connection Frame Number (CFN) at which the reconfiguration is required;
- Frame Offset;
- Chip Offset.

The message may also include the transmit power and time window (Time of Arrival Window Start (ToAWS) and Time of Arrival Window End (ToAWE)) indication.

It is to be pointed out that, according to the current 3GPP TS 25.433 (version 7.4.0, March 2007), the frame and chip offsets of a common channel can be acted upon only at the channel setup itself, and not while the channel is in operation. In the latter case, the only reconfigurable parameters of an S-CCPCH are parameters of common transport channels mapped on the S-CCPCH, namely the transmit powers and the time windows of the FACHs and of the Paging Channel (PCH) and the powers of the Paging Indicator Chanel (PICH) and MMBS Notification Indicator Channel (MICH).

Like in the conventional NBAP procedures, the Node B shall reply to the reconfiguration request message with a reconfiguration response or reconfiguration failure message, as the case may be. This is shown at Fig. 3.

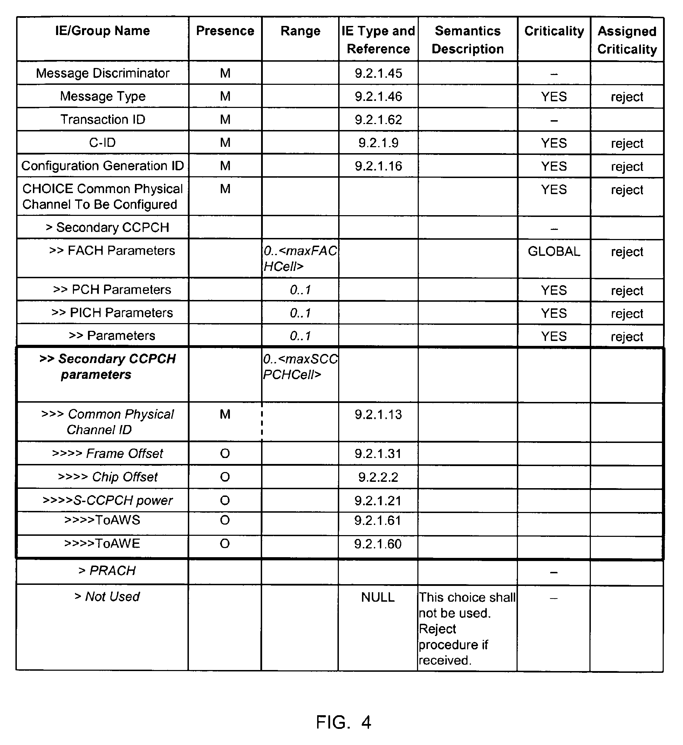

For sending the reconfiguration request message, it is possible to modify the COMMON TRANSPORT CHANNEL RECONFIGURATION REQUEST message defined in 3GPP TS 25.433 by supplementing the section headed "Secondary CCPCH" with an additional information element group headed "Secondary CCPCHs parameters", containing the information elements indicated above. This solution is shown in Fig. 4, where the additional IE group provided according to the invention is enclosed within double-line borders. For sake of simplicity, the individual information elements already included in the COMMON TRANSPORT CHANNEL RECONFIGURATION REQUEST message as currently defined by 3GPP TS 25.433 are not shown. The additional group introduced according to the invention may of course be repeated as many times as are the S-CCPCHs to be reconfigured. The meaning of the different columns in the tabular representation is well known to the skilled in the art and is defined by the 3GPP specifications.

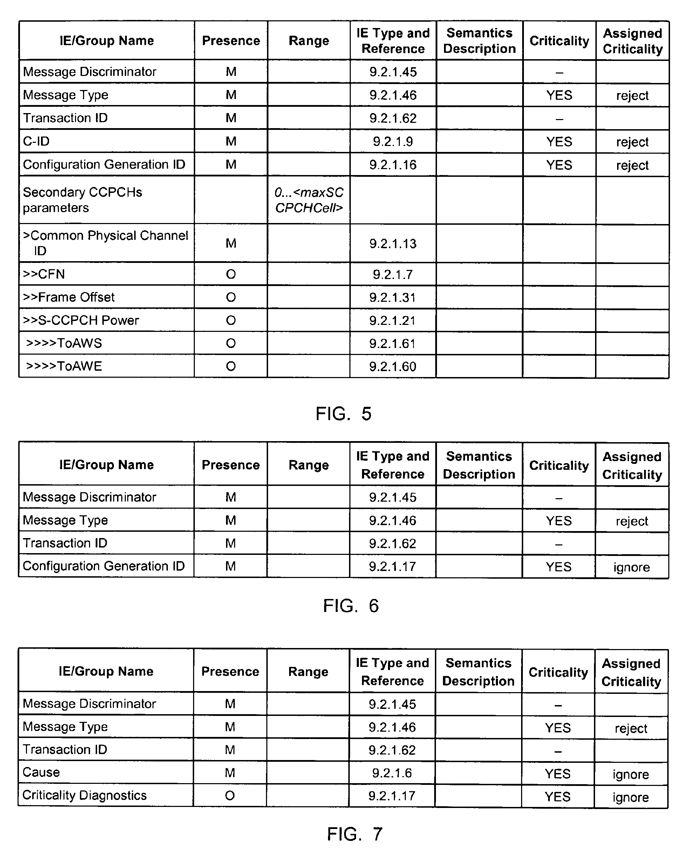

Instead of modifying the existing message by including a repetitive additional group of information elements, a new message, referred to as "COMMON PHYSICAL CHANNEL RECONFIGURATION REQUEST" can be defined. The structure of the new message is shown in Fig. 5. Like the other NBAP messages, the new message will have a "header" comprising the Message Discriminator, Message Type, Transaction ID, Cell ID (C-ID) and Configuration Generation ID lEs, and a "body" comprising the IEs specified above, namely S-CCPCH ID, CFN, frame and chip offsets, and power and time window indications.

The reconfiguration request message is used to reconfigure FDD (Frequency Division Duplexing) S-CCPCHs by changing the respective Frame Offset and/or Chip Offset. In practice, the reconfiguration corresponds to delaying the current timing, at the indicated CFN, by a time amount corresponding to the indicated frame and chip offsets, This sill also corresponds to delaying by the same amount of time the transmission of MTCH PDUs from the affected cell of the Node B with reference to the current CFN.

The reconfiguration may take place at a point in time specified in the message (synchronised procedure), i.e. in correspondence with a given CFN, if the corresponding IE is present in the message. From that point in time on, the Node Bs and UEs concerned will operate according to the reconfigured parameters.

If no CFN is indicated, reconfiguration takes place as soon as possible (asynchronous procedure). The synchronised procedure is however preferable since it is more precise.

If the reconfiguration is successful, the Node B replies with a reconfiguration response message. A new COMMON PHYSICAL CHANNEL RECONFIGURATION RESPONSE message, similar to the existing COMMON TRANSPORT CHANNEL RECONFIGURATION RESPONSE message apart from the values of the IEs, is defined for this aim and is shown in Fig. 6.

If the Node B is not able to support all or part of the novel configuration, it shall reject the configuration of all channels specified in the REQUEST message, and the channels shall remain in the same state as prior to the attempted reconfiguration procedure. In this case, the Node B shall respond with a reconfiguration failure message. A new COMMON PHYSICAL CHANNEL RECONFIGURATION FAILURE message, similar to the existing COMMON TRANSPORT CHANNEL RECONFIGURATION FAILURE message apart from the values of the lEs, is defined for this aim and is shown in Fig. 7. In this message, the "Cause" IE shall be set to specifically defined values. The value of "Configuration Generation ID" IE from the COMMON PHYSICAL/TRANSPORT CHANNEL RECONFIGURATION REQUEST message shall not be stored.

In case of successful reconfiguration, RNC will inform the UEs camped in the cell(s) controlled by the concerned Node B of the timing reconfiguration (step 24), via messages transmitted on control channel MCCH, e.g. messages like MBMS CURRENT CELL P-T-M RB INFORMATION (RB = Radio Bearer) and NEIGHBOURING CELL P-T-M RB INFORMATION (see 3GPP TS 25.331); this way the updated transmission time on S-CCPCH would be synchronised with the NBAP message.

After reconfiguration, in case of dynamic configuration of the S-CCPCHs at step 21, the process cycles through steps 22 and 23 until RNC receives a RANAP (Radio Access Network Application Part) MBMS SESSION STOP message from the core network, stopping the MBMS session and tearing down the transport and physical common channels used for the service. In case of a static configuration of the S-CCPCHs at step 21, the process cycles through steps 22 and 23 indefinitely, i.e. as long as the cell(s) exist(s).

The method will be implemented by the means, already provided in RNC 4, which are in charge of performing the initial synchronisation, aligning the initial timing for MTCH transmission on S-CCPCHs, monitoring the timing difference between the various S-CCPCHs and providing for NBAP communication with the Node Bs.

In case such means are in the form of a software product or computer program stored in a memory of a processor or computer in RNC 4, according to the invention such will be arranged, upon detection of the attainment of the critical value of the timing difference, to cause such processor or computer to effect a reconfiguration of the concerned S-CCPCHs B and to send of an information message to the UEs as disclosed above, instead of deleting and re-establishing the channels.

Of course, the means implementing the method could also be hardware means.

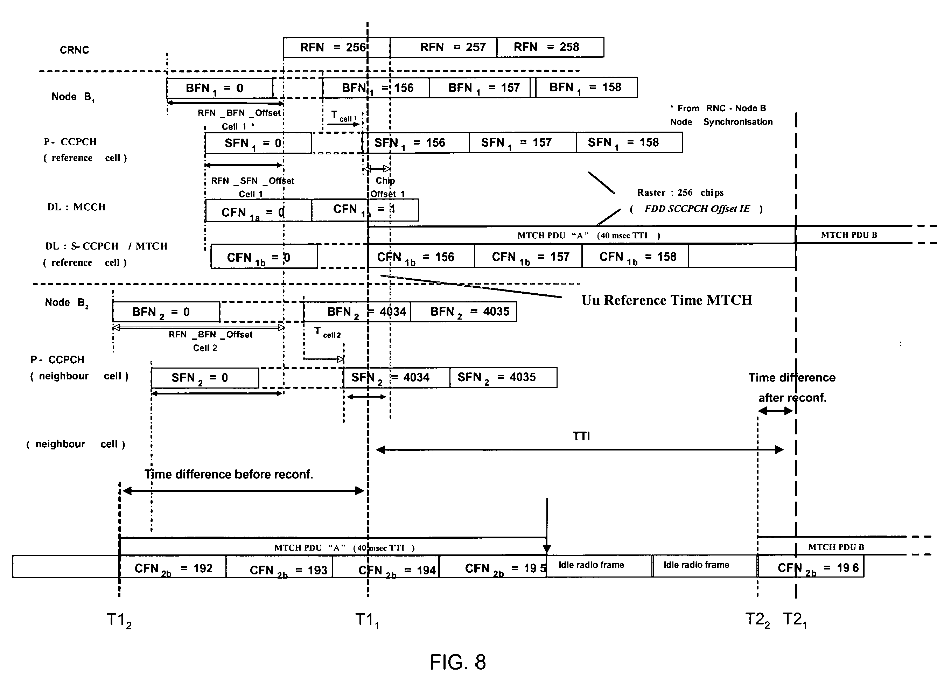

An example of timing reconfiguration according to the present invention is illustrated in Fig. 8. The Figure shows the frame number counter at RNC (RFN) and the counters utilised at the Node Bs (denoted Node B1 for the reference or serving cell 2a and Node B2 for the neighbour cell) for timing the transmission of the information contents (MTCH PDUs) of an MBMS session on the radio channel. The tasks of the different counters are well known to the skilled in the art and do not need to be disclosed here. It is only recalled that CFN is the time tag transmitted by RNC and used by the Node Bs for determining the instant of transmission of each PDU on the air interface. The Figure assumes a TTI of 40 ms, corresponding to four 10 ms frames. The time slot is 1/15 of the frame duration, namely 667 µs. The maximum time shift tolerable in order soft combining of corresponding PDUs is possible is therefore 40.667 ms. Two consecutive MTCH PDUs (denoted PDU A and PDU B in the Figure) are considered, the first of which is to be sent on the air interface in correspondence with time tags CFN = 156 for Node B1 and CFN = 192 for Node B2. As shown in the drawing, at the start of the transmission of PDU A by Node B1 and Node B2 (instants T1₁ and T1₂, respectively), the clock drift between the clocks of Node B1 and B2 results in Node B2 being more than two frames in advance with respect to Node B1. Such difference is considered to be above the critical value, so that a reconfiguration of the S-CCPCH associated with Node B2 is necessary. Neglecting for sake of simplicity the chip offset, the reconfiguration message sent to Node B2 will indicate that an offset of two frames is to be recovered. Moreover, it is assumed that a synchronous reconfiguration is to be performed and that, to this end, the message indicates that reconfiguration shall take place at instant CFN = 196. Thus, at the end of transmission of PDU A, node B2 will suspend transmission of MTCH PDUs while remaining operating, and will wait for two frames ("idle radio frames" in the drawing) before starting transmission of PDU B. In this manner, the drift after reconfiguration (time interval T2₂ - T2₁) becomes significantly less than one frame. Of course, by specifying also a chip offset in the message, a finer final alignment could be achieved.

Note also that, if the Node B has enough buffer capacity, the Node B is not to discard any PDU, so that a seamless configuration is possible.

The advantages afforded by the invention are clearly apparent from the above description.

First, it is possible to compensate the clock drift among Node Bs of an MBMS Service Area while the common channels conveying the data are in operation and without affecting the quality detected by the served UEs, in particular without substantial loss of data.

Besides, the NBAP signalling required to perform compensation is reduced with respect to what currently envisaged according to the 3GPP specifications, in that only one procedure is required (the reconfiguration) instead of two (channel deletion and channel Setup). This brings to a lower load over the lub interface between RNC and the Node Bs and to a lower error probability.

A further advantage is at Radio Resource Management level. The deletion of an S-CCPCH and its subsequent re-establishment would create a temporary instability for the resource of the system (e.g. after the deletion, the released resources could be assigned to other channels/traffic and could be no longer available for the subsequent channel re-establishment), and this is avoided by reconfiguring the channel while it is still in operation.

It is evident that the above description has been given by way of non-limiting example and that changes and modifications are possible without departing from the scope of the invention as defined in the appended claims. In particular, more than two Node Bs can be involved in the transmission to user 5, and the Node Bs can be controlled by multiple RNCs cooperating with one another.

## Claims

1. A method of compensating a clock drift among Node Bs (3a, 3b) simultaneously providing a point-to-multipoint MBMS service to a user (5), the method comprising monitoring (22) the timing difference among said Node Bs (3a, 3b) and being **characterised in that**, upon detection (23) of the attainment of a critical value of that timing difference, a reconfiguration message is sent (24) to at least one of such Node Bs (3b) in order to correct timing parameters of a physical common channel (7b) carrying the MBMS service from said at least one Node B (3b) to the user while said common channel (7b) is in operation.

2. The method as claimed in claim 1, **characterised in that** said timing parameters include new values of a frame offset and/or a chip offset between a network controller (4) and said node B (3b).

3. The method as claimed in claim 2, **characterised in that** said timing parameters further include an indication of a time point at which reconfiguration is to take place.

4. The method as claimed in claim 2 or 3, **characterised in that** said reconfiguration message further includes a transmit power and time window indication for said physical common channel (7b).

5. The method as claimed in any preceding claim, **characterised in that** said timing parameters and said transmit power and time window indication are included as additional information elements into a common transport channel reconfiguration request message sent to the Node B (3b) for reconfiguring transmit powers and/or time windows of common transport channels mapped on said common physical channel (7b).

6. The method as claimed in any of claims 1 to 4, wherein said timing parameters and said transmit power and time window indication are included as information elements into a dedicated common physical channel reconfiguration request message.

7. The method as claimed in any preceding claim, **characterised in that** said reconfiguration message includes as many instances of said timing parameters and said transmit power and time window indication as are the common physical channels (7a, 7b) to be reconfigured.

8. The method as claimed in any preceding claim, **characterised in that** said reconfiguration request message causes a Node B (3b) to delay the data unit transmission by an amount corresponding to the frame and/or chip offsets specified in the reconfiguration request message.

9. The method as claimed in any preceding claim, **characterised in that**, for common physical channels (7a, 7b) dynamically configured in response to an explicit start message for the concerned MBMS session, said monitoring and correcting steps (22, 23) are periodically repeated as long as the session is ongoing.

10. The method as claimed in any of claims 1 to 8, **characterised in that**, for common physical channels (7a, 7b) statically configured at a cell setup, said monitoring and correcting steps (22, 23) are indefinitely repeated in periodic manner.

11. The method as claimed in any preceding claim, **characterised in that** it further includes sending (24) to said user (5) a message informing of the occurred reconfiguration of a common physical channel (7b).

12. A radio network controller (4) for a wireless communication system supporting a point-to-multipoint MBMS service in which users (5) are simultaneously served by multiple Node Bs (3a, 3b), wherein said radio network controller (4) is arranged to monitor a timing difference between Node Bs (3a, 3b) involved in an MBMS session towards a same user (5), **characterised in that** said radio network controller (4) is further arranged to detect when said timing difference attains a critical value and to consequently send to at least one of such Node Bs (3a, 3b) serving the user (5) a reconfiguration message to correct timing parameters of a physical common channel (7a, 7b) carrying the MBMS service, while said common channel (7a, 7b) is in operation.

13. A software product to be installed in a processor of a radio network controller (4) for a wireless communication system supporting a point-to-multipoint MBMS service in which users (5) are simultaneously served by multiple Node Bs (3a, 3b), the software product comprising a computer program containing instructions for causing said processor to implement a method as claimed in any of claims 1 to 10.

14. A wireless communication system supporting a point-to-multipoint MBMS service in which users (5) are simultaneously served by multiple Node Bs (3a, 3b), and comprising at least one MBMS service area (1) controlled by a radio network controller (4) as claimed in claim 11.
